# EUROPÄISCHE PATENTSCHRIFT

(11) **EP 0 431 346 B1**
(45) Veröffentlichungstag und Bekanntmachung des Hinweises auf die Patenterteilung: **16.02.1994**
(21) Anmeldenummer: 90121527.7
(22) Anmeldetag: 10.11.1990
(51) Int. Cl.: B65G 61/00, B65G 57/24, B65H 31/30

(54) **Verfahren zum Be- und Entladen von Paletten mit Stapeln von flächigen Produkten und Einrichtung zur Durchführung des Verfahrens**
Method of loading and unloading pallets with piles of flat products and device therefor
Procédé de chargement et déchargement de palettes avec piles de produits en nappe et dispositif pour cela

(30) Priorität: 05.12.1989 DE 3940190
(43) Veröffentlichungstag der Anmeldung: 12.06.1991
(73) Patentinhaber: Kolbus GmbH & Co. KG, D-32369 Rahden (DE)
(72) Erfinder: Rathert, Horst, W-4950 Minden (DE)

(56) Entgegenhaltungen:
- WO-A-81/01282
- WO-A-87/06565
- DE-A- 2 718 338
- DE-A- 3 107 495
- DE-B- 1 207 876
- DE-U- 8 335 816
- FR-A- 2 587 311

## Beschreibung

Die Erfindung bezieht sich auf ein Verfahren zum fortlaufenden lagenweisen Be- und Entladen von Paletten mit Stapeln von flächigen Produkten wie Falzbogen, Zeitschriften, Bücher, Broschüren od. dgl. sowie auf eine Einrichtung zur Durchführung des Verfahrens.

Bei der Herstellung von Büchern, Broschüren, Zeitschriften od. dgl. Produkte besteht vielfach die Notwendigkeit große Mengen von Druckereierzeugnissen zur Zwischenspeicherung und/oder für den innerbetrieblichen Transport auf Paletten zu stapeln. Während für das Beladen der Paletten Palettiereinrichtungen Verwendung finden, die ein maschinelles Abstapeln ermöglichen, erfolgt das Entladen der einzelnen Stapel von Druckereierzeugnissen grundsätzlich von Hand, was nicht nur außerordentlich arbeitskräfteintensiv ist, sondern auch schwere körperliche Arbeit verlangt. Darüber hinaus lassen sich Verschiebungen der zu Stapeln zusammengefaßten einzelnen Druckereierzeugnisse zueinander, insbesondere beim manuellen Entladen, aber auch beim maschinellen Abstapeln nicht vermeiden.

Zum Entladen für das Beschicken einer Zusammentragmaschine beispielsweise werden die auf Paletten zwischengespeicherten Stapel von gefalzten Druckbogen mittels eines Hubstaplers vom Zwischenlager zur Anlege- oder Beschickungsvorrichtung der Zusammentragmaschine transportiert und die einzelnen Druckbogenstapel dort von der Bedienungsperson manuell angelegt.

Palettiervorrichtungen zum lagenweise Beladen von Paletten mit Druckereierzeugnissen gehören allgemein zum Stand der Technik. So ist aus der DE-OS 31 07 495 eine nach dem Abschubsystem arbeitende Vorrichtung zum orientierten Ablegen von Stapeln aus bedruckten Zeitungs- oder Buchseiten oder sonstigen Drucksachen auf eine Palette bekannt, mit einer Schiebeplattform, auf die die zusammengestellte Formation von Produkten von einem Querschieber überführt wird. Die Schiebeplattform fährt danach bis über die Palette und nach Absenken eines Abschubelementes hinter die Formation und Absenken der Schiebeplattform auf eine bereits vorhandene Produktlage bewegt sich die Schiebeplattform unter dem feststehenden Abschubelement zum Abstreifen der Formation zurück.

Auch die DE-U-8 335 816 offenbart eine nach dem Abschubsystem arbeitende Vorrichtung. Diese weist Zwischenträger zwischen Stapellagen auf und bildet den Oberbegriff des Vorrichtungsanspruchs 3.

Bei den mit Schiebeplattform und Abschubelement arbeitenden Stapelvorrichtungen ergibt sich durch die Bauhöhe der Plattform ein relativ großer Höhenunterschied zwischen der Auflagefläche der Plattform und der vorhandenen Produktlage auf der Palette. Der hierdurch bedingte relativ große Absetzweg beim Abstreifen der Produkte führt zwangsläufig dazu, daß die auf der Schiebeplattform exakt ausgerichteten Produkte ihre nach einer bestimmten Stapelordnung vorgegebene Formation nach dem Abstreifen verlieren, was in verstärktem Maße bei dünnen Produkten auftritt. Hierbei besteht vor allem die Gefahr, daß sich diese dünnen Produkte übereinanderschieben mit der Folge einer instabilen Stapelung. Ein Ausrichten nach erfolgter Abstapelung ist vielfach nicht durchführbar, beim späteren Entstapeln ergeben sich somit erhebliche Probleme.

Bedingt durch die zwischen den Produkten und den Auflageflächen auftretende Reibung beim Querabschub auf die Schiebeplattform und beim Abschub von der Schiebeplattform können diese bekannten Palettiereinrichtungen der Forderung nach einer schonenden Behandlung empfindlicher Produkte wie übereinandergestapelte Bücher oder Broschuren nicht gerecht werden.

Die Aufgabe der Erfindung besteht darin, ein Verfahren der gattungsgemäßen Art sowie eine Einrichtung zur Durchführung des Verfahrens zu schaffen, die sowohl ein vollautomatisches Be- und Entladen von Paletten mit Stapeln von flächigen Produkten wie Falzbogen, Zeitschriften, Bücher, Broschuren od. dgl. ermöglichen, und die gewährleisten, daß die Ausrichtung der Produkte innerhalb eines Stapels zueinander sowie die Ausrichtung der zu einer Reihe formierten Stapel exakt beibehalten wird. Darüber hinaus soll eine schonende Behandlung der Produkte beim Be- und Entladen sichergestellt werden.

Zur Lösung dieser Aufgabe ist das erfindungsgemäße Verfahren dadurch gekennzeichnet, daß die Stapel einer Stapellage zum Beladen einer Palette auf einen Zwischenträger abgesetzt und zum Entladen einer Palette von einem Zwischenträger abgehoben werden, indem sich Transportelemente einer Be- und Entladestation unter die Stapel legen und zum Absetzen und Abheben durch den Zwischenträger hindurch bzw. in den Zwischenträger fahren, und daß Stapellage und Zwischenträger gemeinsam als Einheit auf der Palette gestapelt und von der Palette entstapelt werden. Dabei werden nach einem weiteren Verfahrensmerkmal die Stapel zum Beladen einer Palette reihenweise auf den Zwischenträger abgesetzt und zum Entladen einer Palette reihenweise von dem Zwischenträger abgehoben und die Zwischenträger schrittweise durch die Be- und Entladestation gefördert.

Die erfindungsgemäße Einrichtung zur Durchführung des Verfahrens wird mit den im Patentanspruch 3 angegebenen Merkmalen gelöst. Vorteilhafte Ausführungsformen der Erfindung ergeben sich aus den übrigen Unteransprüchen.

Mit dem erfindungsgemäßen Verfahren sowie mit der Einrichtung zur Durchführung des Verfahrens wird erstmals ein vollautomatisches Be- und Entladen von Paletten mit Stapeln von flächigen Produkten wie Falzbogen, Zeitschriften, Bücher, Broschuren od. dgl. vorgeschlagen. Das Abheben der Stapelreihen vom Zwischenträger beim Entladen sowie das Absetzen der Stapelreihen auf den Zwischenträger beim Beladen schließt jegliche Positionsänderung der Stapel sowie ein Verrutschen der Einzelprodukte zueinander aus, was nicht nur produktschonend, sondern hinsichtlich der Weiterverarbeitung bekanntlich von ausschlaggebender Bedeutung ist. In Verbindung mit den Zwischenträgern entsteht ein stabiler, für den innerbetrieblichen Transport hervorragend geeigneter Palettenstapel.

Ein Ausführungsbeispiel der Einrichtung zum Be- und Entladen von Paletten mit Stapeln von Druckereierzeugnissen wird nachfolgend anhand der Zeichnungen näher erläutert. Es zeigen:
- Fig. 1: eine Seitenansicht der Einrichtung im Schnitt gemäß der Linie A-B in Fig. 2;
- Fig. 2: eine Draufsicht auf die Einrichtung;

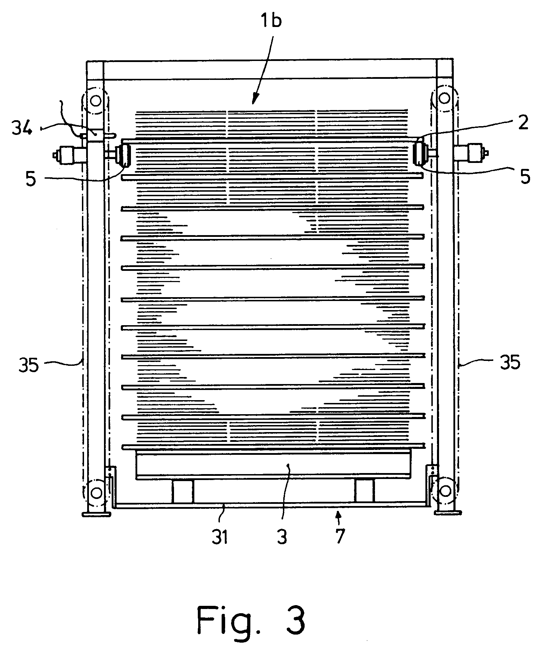

- Fig. 3: eine Seitenansicht der Einrichtung gemäß Pfeilrichtung x in Fig. 1;
- Fig. 4: eine Seitenansicht der Einrichtung gemäß Pfeilrichtung y in Fig. 1;
- Fig. 5: eine Seitenansicht der Querfördereinrichtung im Schnitt gemäß der Linie C-D in Fig. 1;

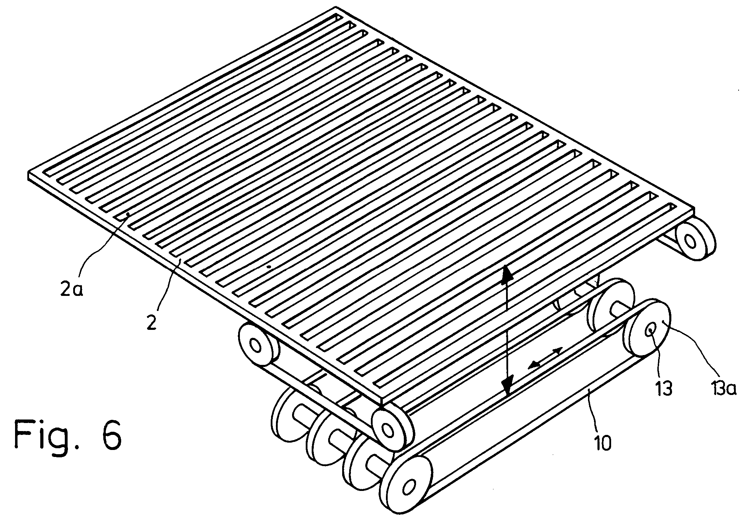

- Fig. 6: eine perspektivische Darstellung eines Zwischenträgers im Bereich der Querfördereinrichtung;
- Fig. 7: eine perspektivische Darstellung eines Zwischenträgers in einer abgewandelten Ausbildung und mit abgewandelten Förderelementen einer Querfördereinrichtung.

In der Einrichtung zum Be- und Entladen von Paletten 3 mit Stapeln 1a von Druckereierzeugnissen finden Zwischenträger 2 Verwendung auf die jeweils lagenweise Reihen 1 von Stapeln 1a abgelegt bzw. von denen jeweils lagenweise Reihen 1 von Stapeln 1a aufgenommen werden.

Zum Unterfassen der Zwischenträger 2 erstrecken sich diese in Laufrichtung betrachtet seitlich über die Stapellagen 1b hinaus und sind mit Längsausnehmungen 2a in regelmäßigen Abständen versehen, durch die hindurch zum Absetzen von Stapelreihen 1 auf den Zwischenträger 2 bzw. zum Abnehmen von Stapelreihen 1 von dem Zwischenträger 2 Riemen 10 einer Querfördereinrichtung 4 in lotrechter Bewegungsebene auf und ab fahrbar sind.

Die Förderelemente der Querfördereinrichtung 4 werden von einer Gruppe von Riemen 10 in paralleler Anordnung gebildet, deren gegenseitige Abstände auf die Zwischenabstände der Längsausnehmungen 2a der Zwischenträger 2 abgestimmt sind.

Ein Hubrahmen 11, an dem Arbeitszylinder 12 angreifen, dient der Aufnahme von Lagerwellen 13 mit Riemenscheiben 13a, um die die Riemen 10 geführt sind. Der Antrieb erfolgt von einem Motor 15 aus über eine Gelenkwelle 16 auf einen Kegeltrieb 17. Zur Vermeidung eines Durchhangs der Riemen 10 stützen sich diese auf Schienen 18 ab.

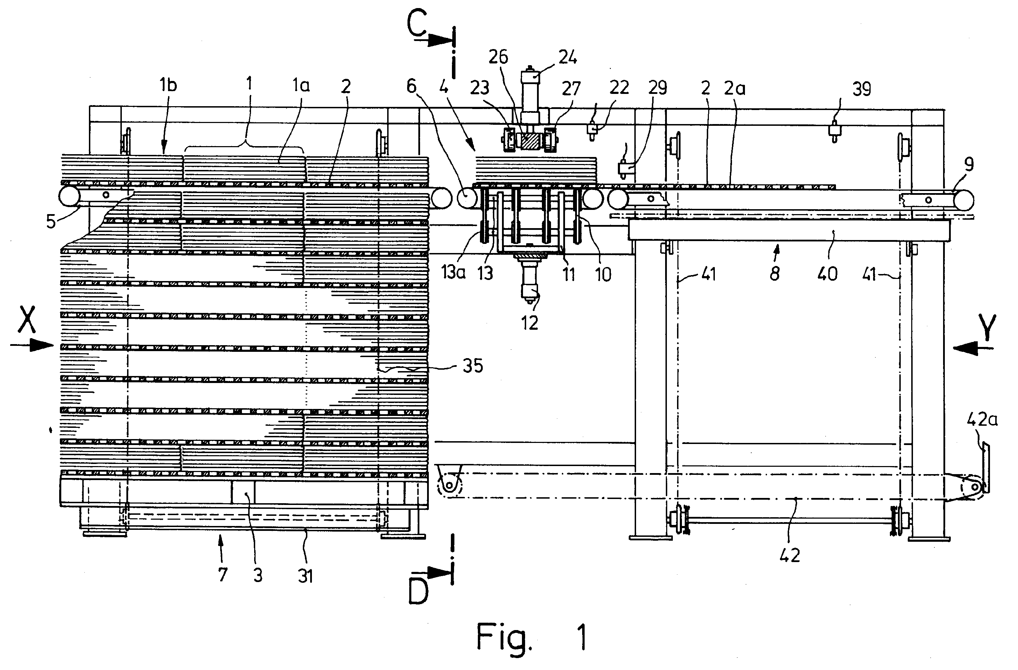

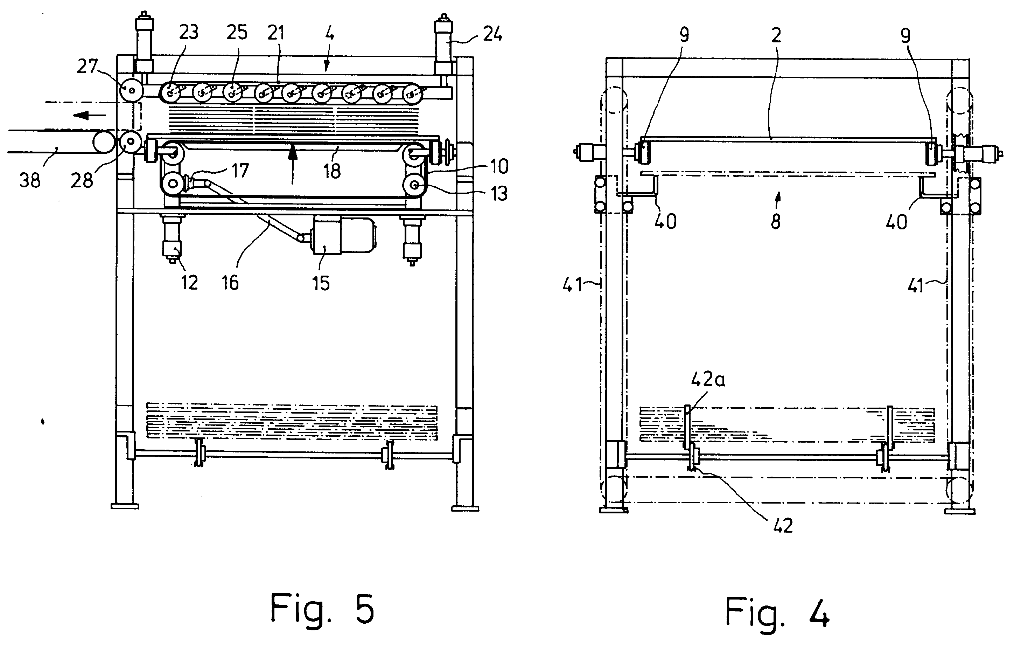

Wie aus Fig. 1 in Verbindung mit Fig. 5 ersichtlich, ist die Querfördereinrichtung 4 mit einem am Maschinenrahmen gehalterten Oberbandsystem ausgerüstet, bestehend aus zwei parallel angeordneten um Umlenkräder 23 geführten Bändern 21, die mit wechselnden Geschwindigkeiten antreibbar sind. Umlenkräder 23 sowie sich zwischen diesen befindende federnd gelagerte Stützrollen 25 sind von einem Längsträger 26 aufgenommen, an dem endseitig Arbeitszylinder 24 angreifen, durch die die Bänder 21 des Oberbandsystems bis auf die Stapelreihen 1 abgesenkt werden. Das Oberbandsystem insgesamt läßt sich am Maschinenrahmen auf Stapelhöhe einstellen.

Für dünne Druckereierzeugnisse, die leicht zum Verschieben gegeneinander neigen, kann vorgesehen sein, die Bänder 21 motorisch anzutreiben.

Endseitig des die Umlenkräder 23 sowie die Stützrollen 25 tragenden Längsträgers 26 befindet sich frei drehbar ein Druckrollenpaar 27, das mit einer diesem gegenüberliegenden Beschleunigungswalze 28 zusammenwirkt, die von einem Motor drehzahlregelbar angetrieben wird.

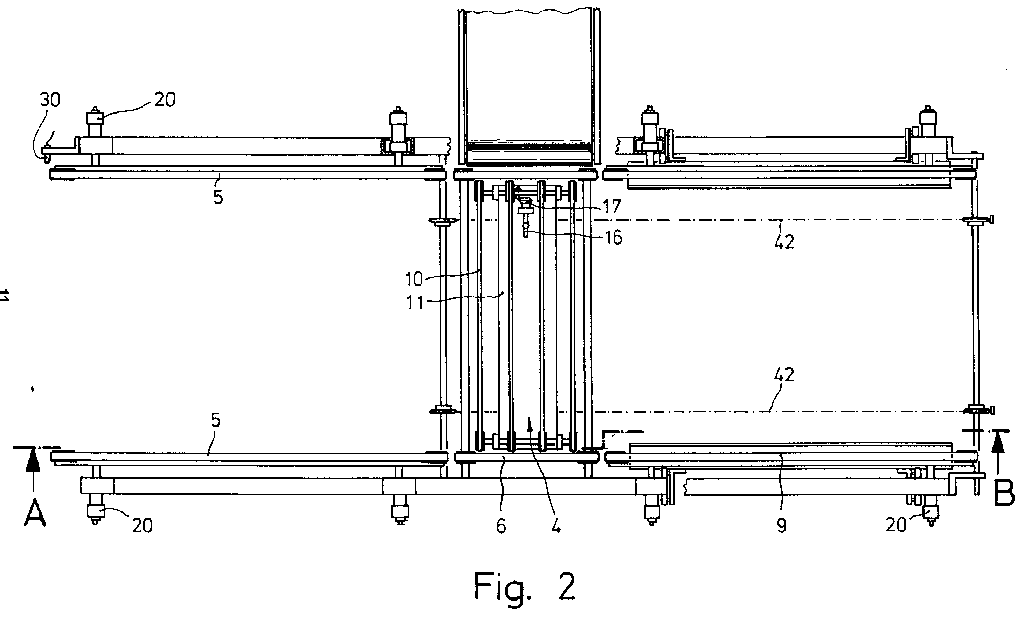

Wie die Fig. 2 verdeutlicht, befindet sich die Querfördereinrichtung 4 zwischen zwei Trumen eines diese kreuzenden Zwischenförderers 6, um ein freies Hindurchbewegen der Querfördereinrichtung 4 in lotrechter Bewegungsebene zu ermöglichen. Vor dem Zwischenförderer 6 oberhalb einer Palettenhubeinrichtung 7 und hinter dem Zwischenförderer 6 oberhalb einer Zwischenträgerhubeinrichtung (8) sind niveaugleich mit dem Zwischenförderer 6 jeweils weitere Förderer 5, 9 installiert, die alle miteinander von einem gemeinsamen Motor angetrieben werden.

Die Trume der drei niveaugleichen Förderer 5, 6 und 9 stützen die Zwischenträger 2 ausschließlich im Seitenbereich und zur Übernahme bzw. Abgabe des Zwischenträgers 2 lassen sich die Trume der beiden Förderer über der Palettenhubeinrichtung (7) und über der Zwischenträgerhubeinrichtung (8) im Abstand zueinander im Sinne eines öffnens und Schließens mittels Arbeitszylinder 20 verfahren.

Den Trumen des Förderers (5) über der Palettenhubeinrichtung (7) kann ein Oberbandsystem zugeordnet sein, das mit den Trumen synchron antreibbar und auf die Stapel (1a) eines Zwischenträgers (2) absenkbar ist, um somit zum Verrutschen neigende Produkte eingespannt zu fördern.

Zum Entladen einer Ladeeinheit, bestehend aus einer Palette 3 mit Stapeln 1a von Druckereierzeugnissen, beispielsweise Falzbogen, die sich lagenweise auf Zwischenträgern 2 befinden, wird die Palette 3 auf eine Hubplatte 31 der Palettenhubeinrichtung 7 unter seitlicher Ausrichtung sowie unter Ausrichtung in Längsrichtung gefahren und über motorisch angetriebene Ketten 35 mit der beladenen Palette 3 soweit durch die auseinandergefahrenen Trume des oberhalb angeordneten Einlaufförderers 5 hindurch angehoben, bis eine Lichtschranke 34 von dem Zwischenträger 2 der oberen Stapellage 1b abgedeckt ist, wobei sich der Zwischenträger 2 dann über den beiden Trumen des Einlaufförderers 5 befindet. Gesteuert über die Arbeitszylinder 20 schwenken die auseinandergefahrenen Trume des Förderers 5 zurück sowie unter den sich über die Stapellage 1b hinaus erstreckenden Zwischenträger 2. Es folgt ein Absenken der Palette 3 um eine definierte Strecke zum Absetzen des Zwischenträgers 2 auf die Trume des Einlaufförderers 5, und gleichzeitig entsteht hierdurch ein Freiraum zwischen dem oberen Zwischenträger 2 und der sich darunter befindenden Stapellage 1b.

Die Trume aller drei Förderer 5, 6, 9 werden in Umlauf gesetzt und somit der auf den Trumen aufliegende Zwischenträger 2 mit den Stapeln 1 als Einheit in die Querfördereinrichtung 4 überführt, bis die vorn liegende Stapelreihe 1 eine Lichtschranke 22 erreicht und dadurch der Zulauf des Zwischenträgers 2 unterbrochen wird.

Die Position der Lichtschranke 22 ist formatabhängig und veränderbar.

Die exakte Ausrichtung der Längsausnehmungen 2a des Zwischenträgers 2 zu den Riemen 10 der Querfördereinrichtung 4 erfolgt über eine Lichtschranke 29 durch Abtastung einer definierten Längsausnehmung 2a.

Nach erfolgter Positionierung des Zwischenträgers 2 bewegt sich der Hubrahmen 11 mit dem Riemen 10 nach oben, indem diese die Längsausnehmungen 2a des Zwischenträgers 2 durchgreifen und sich ihre Oberkante ungefähr 10 mm über dem Zwischenträger 2 befindet. Dabei wird eine Stapelreihe 1 von den Riemen 10 der Querfördereinrichtung 4 vom Zwischenträger 2 abgehoben und übernommen. Mit Anheben der Gruppe von Riemen 10 senkt sich gleichzeitig das Oberbandsystem und die ausgehobene Stapelreihe 1 ist zwischen dem Riemen 10 und den Bändern 21 des Oberbandsystems geführt. Die vom Motor 15 angetriebenen Riemen 10 der Querfördereinrichtung 4 befördern nun die Stapelreihe 1 quer zur Einlaufrichtung in den Wirkbereich der Beschleunigungswalze 28 mit dem zugeordneten Druckrollenpaar 27, wodurch einzelne Stapel 1a auf einen bestimmten Taktabstand zueinander gebracht und danach auf ein der Querfördereinrichtung 4 angeschlossenes Ausfuhrband 38 überführt werden.

Ist die Lichtschranke 22 nicht mehr von der Stapelreihe 1 abgedeckt, wird der Vorschub der Riemen 10 beendet und ein erneuter schrittweiser Vorschub einer weiteren Stapelreihe 1 auf dem Zwischenträger 2 mittels der Trume der Förderer 5, 6 und 9 folgt bis die Lichtschranke 22 durch die Stapelreihe 1 wieder bedeckt ist. Der Arbeitsablauf wiederholt sich so oft wie Stapelreihen 1 auf einem Zwischenträger 2 vorhanden sind.

Mit schrittweisem Durchlauf des Zwischenträgers 2 durch die Querfördereinrichtung 4 gelangt dieser auf die Trume des Auslaufförderers 9 oberhalb der Zwischenträgerhubrichtung 8 und nach Abdecken einer Lichtschranke 39 durch die in Bewegungsrichtung gesehen vordere Kante des Zwischenträgers 2 wird die Bereitstellung einer neuen Stapellage 1b auf einem Zwischenträger 2 ausgelöst, während sich eine letzte Stapelreihe 1 aus der Querfördereinrichtung 4 hinausgewegt.

Nach öffnen der Trume des Einlaufförderers 5 erfolgt ein Anheben des gesamten Palettenstapels, die auseinandergefahrenen Trume schwenken einwärts und somit wieder unter den Zwischenträger 2.

Unmittelbar anschließend an die Ausfuhr der letzten Stapelreihe 1 der vorauslaufenden Stapellage 1b aus der Querfördereinrichtung 4 beginnt die Zufuhr des nachfolgenden Zwischenträgers 2 durch die Trume des Einlaufförderers 5 sowie des Zwischenförderers 6.

Wie bereits erwähnt, gelangt ein Zwischenträger 2 nach dem Entstapeln der Falzbogenstapel 1a auf den Trumen des Auslaufförderers 9 in die Zwischenträgerhubeinrichtung 8 und mit Erreichen der Endposition öffnen die Trume des Förderers 9 und der Zwischenträger 2 wird Tragwinkeln 40 an motorisch angetriebenen Hubketten 41 zugeführt. Eine Lichtschrankensteuerung überwacht die Oberkante des Zwischenträgerstapels in der Hubeinrichtung und sorgt für ein schrittweises Absenken.

Nachdem Stapellage für Stapellage entstapelt wurde, befindet sich die Hubplatte 31 der Palettenhubeinrichtung 7 mit der Leerpalette in der oberen Endstellung und nach Übernahme des letzten Zwischenträgers 2 durch die Trume des Einlaufförderers 5 fährt die Hubplatte 31 bis in die untere Endstellung. Zur gleichen Zeit bewegt sich die Zwischenträgerhubeinrichtung 8 mit den leeren Zwischenträgern 2 ebenfalls in die untere Endposition und setzt dabei den Zwischenträgerstapel auf eine umlaufend angetriebene flurnahe Förderbahn 42 mit abständig angeordneten Trumen ab. An diesen befestigte Transporteure 42a hintergreifen den Zwischenträgerstapel und bringen diesen auf die zwischenzeitlich in die untere Endstellung abgesenkte Leerpalette 3 in der Palettenhubeinrichtung 7, die Zwischenträgerhubeinrichtung 8 fährt sodann wieder in ihre obere Endstellung. Der sich nun auf der Palette 3 befindende Zwischenträgerstapel wird aus der Palettenhubeinrichtung 7 entfernt.

Während dieses vorab beschriebenen Wechsels vollzieht sich das Entstapeln des sich noch in der Entladeeinrichtung befindenden letzten Zwischenträgers 2. Nachfolgend wird eine neue Palette mit Stapellagen 1b auf Zwischenträgern 2 auf die Hubplatte 31 der Palettenhubeinrichtung 7 gefahren sowie ausgerichtet und ein neuer Arbeitsablauf von Hand ausgelöst.

Das Beladen einer Palette 3 mit Stapeln 1a von Druckereierzeugnissen, beispielsweise Falzbogen, vollzieht sich im wesentlichen in umgekehrter Reihenfolge. Eine leere Palette 3 gelangt über die Palettenhubeinrichtung 7 in die obere Endstellung und die Zwischenträgerhubeinrichtung 8 wird manuell mit einem ausreichenden Stapel von Zwischenträgern 2 beschickt und bei geöffneten Trumen des Förderers 9 oberhalb der Zwischenträgerhubeinrichtung 8 gelangt durch Anheben des Stapels der obere Zwischenträger 2 in eine Position über den Trumen und wird durch nicht dargestellte von Arbeitszylindern gesteuerte Klemmelemente kraftschlüssig gehalten, während sich die Hubeinrichtung mit dem Zwischenträgerstapel um eine definierte Wegstrecke wieder absenkt. Nach Schließen der Trume des Förderers 9 erfolgt die Freigabe des vereinzelten Zwischenträgers 2 durch die Klemmelemente und damit das Ablegen auf die Trume, die den Zwischenträger 2 nun in einem ersten Schritt zur Querfördereinrichtung 4 transportieren bis die Hinterkante die Lichtschranke 39 freigibt und dadurch der Transport unterbunden wird. Es folgt das genaue Positionieren der Längsausnehmungen 2a des Zwischenträgers zu den Riemen 10 der Querfördereinrichtung sowie das Anheben der Gruppe von Riemen 10 durch die Längsausnehmungen 2a des Zwischenträgers 2 hindurch. Die auf dem Band 38 in gegenseitigen Abständen zueinander einlaufenden Stapel 1a gelangen in den Bereich der Beschleunigungswalze 28 mit dem zugeordneten Druckrollenpaar 27, das zuvor gemeinsam mit dem Oberbandsystem in die untere Wirkposition abgesenkt wurde.

Mittels der Beschleunigungseinrichtung werden die einzelnen Stapel 1a einer Stapelreihe 1 so zugeführt, daß sie in der Querfördereinrichtung 4 einen gewünschten, der Palettenbreite entsprechenden Abstand zueinander einnehmen.

Nach Bilden einer Stapelreihe 1 und Abdeckung der Lichtschranke 22 wird der Umlauf der Riemen 10 unterbrochen und nachlaufende Stapel 1 werden durch die Walze 28 in Verbindung mit dem Druckrollenpaar 27 durch verzögerte Umlaufgeschwindigkeit der Walze 28 zurückgehalten.

Mit Absenken der Riemen 10 erfolgt das Absetzen der Stapelreihe auf den Zwischenträger 2, worauf unmittelbar danach der schrittweise Transport des Zwischenträgers 2 mit der übernommenen Stapelreihe 1 durch die Trume der drei Förderer 5, 6, 9 einsetzt und der Zwischenträger 2 soweit aus den Bereich der Querfördereinrichtung 4 herausgefahren wird, bis sich die erste Stapelreihe 1 nicht mehr im Einlaufbereich der Querfördereinrichtung 4 befindet.

Während des Vortransportes in der Querfördereinrichtung 4 wird der Zustrom auf dem Band 38 der abständig zueinander ankommenden Stapel gestaut.

Nachdem Stapelreihe für Stapelreihe auf den schrittweise vorrückenden Zwischenträger 2 verbracht ist und die letzte Stapelreihe 1 einläuft, gelangt ein neuer Zwischenträger 2 auf die Trume des Förderers 9 oberhalb der Zwischenträgerhubeinrichtung 8, so daß der leere Zwischenträger 2 den beladenen unmittelbar folgen kann und somit keine zusätzliche Stauzeit bei Lagenwechsel entsteht.

Wenn die letzte Stapelreihe 1 zugeführt ist, wird der mit Stapeln 1a von Falzbogen beladene Zwischenträger 2 von den Trumen des Zwischenförderers 6 sowie des Förderers 5 oberhalb der Palettenhubeinrichtung 7 bis zu einer Lichtschranke 30 in die Endstellung über der Palette 3 transportiert und gleichzeitig gelangt eine neue Zwischenlage in Arbeitsposition.

Mit dem Ansteuern der Zylinder 20 werden die Trume des Förderers 5 zum Freigeben der Zwischenlage 2 geöffnet und gleichzeitig erfolgt ein geringfügiges Anheben der Palette 3, wodurch eine Gewichtsbelastung der Trume ausgeschlossen ist. Im Anschluß an den Absetzvorgang des beladenen Zwischenträgers 2 senkt sich die Palette 3 wieder auf ein durch eine Höhenlichtschranke definiertes Niveau.

Stapellage für Stapellage mit ihren jeweiligen Zwischenträgern 2 wird auf die Palette abgesetzt bis diese ihre untere Endposition erreicht und eine vollständige Ladeeinheit gebildet ist. Während des Beladevorgangs eines neuen Zwischenträgers 2 wird die volle Palette 3 aus der Palettenhubeinrichtung 7 herausgefahren. Die Tragwinkel 40 an den Hubketten 41 der Zwischenträgerhubeinrichtung 8 werden zur Aufnahme eines neuen Zwischenträgerstapels abgesenkt und eine neue Leerpalette wird der Palettenhubeinrichtung 7 zugeführt, worauf die Freigabe für den nächsten Palettiervorgang folgen kann. Palettenhubeinrichtung 7 und Zwischenträgerhubeinrichtung 8 fahren in ihre jeweilige obere Endposition. Der Wechsel vollzieht sich während eine komplette Stapellage 1b auf dem Zwischenträger 2 gebildet wird, wodurch eine Unterbrechung der Stapelzufuhr vermieden wird.

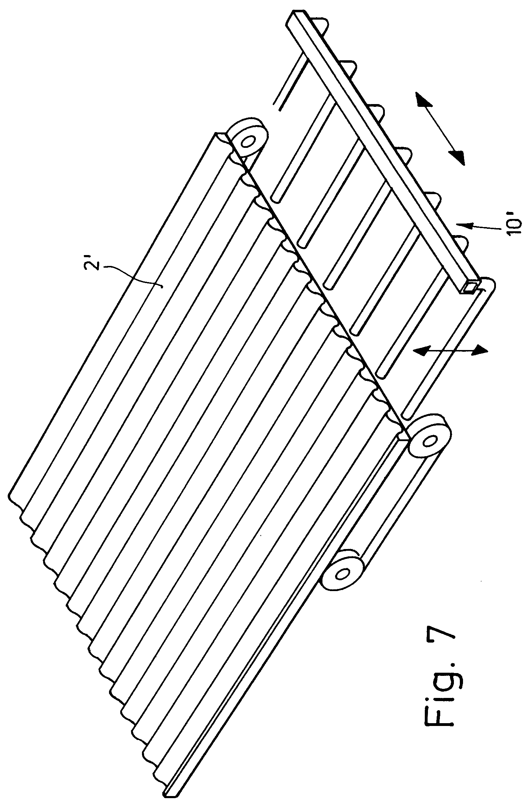

Wie in Fig. 7 veranschaulicht findet in einer abgewandelten Ausgestaltung der erfindungsgemäßen Einrichtung zum fortlaufenden lagenweisen Be- und Entladen von Paletten mit Stapeln von flächigen Produkten wie Falzbogen, Zeitschriften, Bücher, Broschuren od. dgl. ein Zwischenträger Verwendung, dessen Auflagefläche als Wellenbahn oder einer dieser entsprechenden Konfiguration ausgestaltet ist. Zum Absetzen der Stapelreihe 1 auf einen Zwischenträger 2' bzw. zum Abheben einer Stapelreihe 1 von einem Zwischenträger 2' weist die Querfördereinrichtung einen Transportrechen 10' auf, der in horizontalen und vertikalen Ebenen gemäß der Pfeilrichtung verfahren wird und dessen Zinken sich bis in die Wellenbahn absenken.

## Patentansprüche

1. Verfahren zum fortlaufenden lagenweisen Be- und Entladen von Paletten mit Stapeln von flächigen Produkten wie Falzbogen, Zeitschriften, Bücher, Broschüren od. dgl., wobei, die Stapel (1a) einer Stapellage (1b) zum Beladen einer Palette (3) auf einen Zwischenträger (2) abgesetzt und zum Entladen einer Palette (3) von einem Zwischenträger (2) abgehoben werden, indem sich Transportelemente (10) einer Be- und Entladestation unter die Stapel (1a) legen und zum Absetzen und Abheben durch den Zwischenträger (2) hindurch bzw. in den Zwischenträger (2) fahren, und daß Stapellage (1b) und Zwischenträger (2) gemeinsam als Einheit auf der Palette (3) gestapelt und von der Palette (3) entstapelt werden.

2. Verfahren nach Anspruch 1, dadurch gekennzeichnet, daß die Stapel (1a) zum Beladen einer Palette (3) reihenweise auf den Zwischenträger (2) abgesetzt und zum Entladen einer Palette (3) reihenweise von dem Zwischenträger (2) abgehoben und die Zwischenträger (2) schrittweise durch die Be- und Entladestation gefördert werden.

3. Einrichtung zur Durchführung des Verfahrens nach Anspruch 1 oder 2, mit die Stapel (1a) lagenweise aufnehmende Zwischenträger (2) mit seitlichen Überständen zum Unterfassen gekennzeichnet durch Längsausnehmungen (2a) der Zwischenträgern (2) in regelmäßigen Abständen, durch die hindurch zum Absetzen der Stapelreihe (1) auf den Zwischenträger (2) und zum Abheben der Stapelreihe (1) von dem Zwischenträger (2) umlaufend angetriebene oder transportrechenförmige Förderelemente (10 10') einer Querfördereinrichtung (4) mittels einer Antriebseinrichtung (11, 12) in vertikaler Bewegungsebene verfahrbar sind, und durch eine die einzelnen Zwischenträger (2) schrittweise in den Wirkbereich der Querfördereinrichtung (4) überführende und die Längsausnehmungen (2a) der Zwischenträger (2) zu den Förderelementen (10) der Querfördereinrichtung (4) mittels Steuerelemente (29) positionierende Transporteinrichtung (5, 6, 9), deren Trume zum freien Hindurchführen der Querfördereinrichtung (4) die Zwischenträger (2) in randnahen Bereichen stützen.

4. Einrichtung nach Anspruch 3, dadurch gekennzeichnet, daß die Förderelemente der Querfördereinrichtung (4) aus parallel angeordneten Riemen (10) gebildet sind, deren Abstände zueinander auf die Abstände der Längsausnehmungen (2a) der Zwischenträger (2) abgestimmt sind.

5. Einrichtung nach Anspruch 3 oder 4, gekennzeichnet durch ein den Förderelementen (10) der Querfördereinrichtung (4) zugeordnetes Oberbandsystem, bestehend aus absenkbaren, sich auf die Stapelreihe (1) legende frei umlaufende Niederhaltebänder (21).

6. Einrichtung nach Anspruch 5, dadurch gekennzeichnet, daß die Niederhaltebänder (21) zu den Transportelementen (10) der Querfördereinrichtung (4) synchron antreibbar sind.

7. Einrichtung nach Anspruch 3 bis 6, gekennzeichnet durch eine auslaufseitig der Querfördereinrichtung (4) vorgesehene Beschleunigungswalze (28), die mit einer gegenüber der Umlaufgeschwindigkeit der Förderelemente (10) der Querfördereinrichtung (4) höheren Geschwindigkeit antreibbar ist, und durch ein Druckrollenpaar (27), das der Beschleunigungswalze (28) zugeordnet und durch Absenken mit dieser in Wirkverbindung bringbar ist.

8. Einrichtung nach Anspruch 7, dadurch gekennzeichnet, daß die Walze (28) mit wechselnder Geschwindigkeit antreibbar ist.

9. Einrichtung nach Anspruch 3 bis 8, dadurch gekennzeichnet, daß die Transporteinrichtung zum Überführen der Zwischenträger (2) in den Wirkbereich der Querfördereinrichtung (4) aus einem Zwischenförderer (6), aus einem vor diesem oberhalb einer Palettenhubeinrichtung (7) und aus einem hinter diesem oberhalb einer Zwischenträgerhubeinrichtung (8) niveaugleich angeordneten Förderer (5, 9) gebildet ist, wobei die Förderer (5, 6, 9) von einem gemeinsamen Motor schrittweise antreibbar sind.

10. Einrichtung nach Anspruch 3 bis 9, dadurch gekennzeichnet, daß die Trume der Förderer (5, 9) oberhalb der Palettenhubeinrichtung (7) und der Zwischenträgerhubeinrichtung (8) im Sinne eines Öffnens und Schließens zur Übernahme eines angehobenen Zwischenträgers (2) bzw. zur Abgabe eines Zwischenträgers (2) auseinanderbewegbar sind.

11. Einrichtung nach Anspruch 10, dadurch gekennzeichnet, daß die Hub- und Senkbewegung der Palettenhubeinrichtung (7) derart gesteuert ist, daß die Stapellagen (1b) auf den Zwischenträgern (2) zur Übernahme bzw. zur Abgabe durch die Trume des Förderers (5) jeweils über das Niveau der Trume hinausfahren.

12. Einrichtung nach Anspruch 3 bis 11, dadurch gekennzeichnet, daß der Transporteinrichtung (5) über der Palettenhubeinrichtung (7) ein Oberbandsystem zugeordnet ist, das auf die Stapel (1a) eines Zwischenträgers (2) absenkbar und mit den Trumen der Transporteinrichtung (5) synchron antreibbar ist.

13. Einrichtung nach Anspruch 3 bis 12, dadurch gekennzeichnet, daß ein Zwischenträger (2') Verwendung findet, dessen Auflagefläche als Wellenbahn od. dgl. Konfiguration ausgebildet ist und die Stapel (1a) reihenweise von einem Transportrechen (10') einer Querfördereinrichtung auf den Zwischenträger abgesetzt bzw. von diesem abgehoben werden, indem die Zinken des Transportrechens bis in die Wellenbahn absenkbar sind.

## Claims

1. A method of palletizing and depalletizing stacks of products in continuous, layer by layer succession, the products in question being substantially flat and thin, such as folded sheets of paper, periodicals, books, brochures or the like, wherein the stacks (1a) of a stack layer (1b) are deposited on an intercarrier (2) in order to load a pallet (3), and said stacks are lifted from an intercarrier (2) in order to unload a pallet (3), these operations being performed by transport elements (10) which are associated with a loading and unloading station, position themselves beneath the stacks (1a) and move through or into the intercarrier (2) in order to effect deposition and lifting, and wherein the stack layer (1b) and the intercarrier (2) are stacked on the pallet (3) together, as a unit, and are destacked from the pallet (3) in like manner.

2. The method as claimed in claim 1, wherein the stacks (1a) are deposited on the intercarrier (2) in rows in order to load a pallet (3), and they are lifted from the intercarrier (2) in rows in order to unload a pallet (3), and the intercarriers (2) are conveyed through the loading and unloading station in a stepwise manner.

3. An installation utilizing the method as claimed in claim 1 or claim 2, with intercarriers (2) which receive the stacks (1a) in layers, said intercarriers having laterally projecting edges for being gripped from below, comprising regularly spaced lenghwise slots (2a) in the intercarriers (2) through which conveying elements (10), associated with a translator (4) and caused to circulate by means of a drive or in the type of transport rakes (10'), can be moved in a vertical movement plane by means of a drive arrangement (11, 12) so as to deposit the stack row (1) on the intercarrier (2) and to lift the stack row (1) therefrom, and further comprising a transport arrangement (5, 6, 9) for transferring the individual intercarriers (2), in a stepwise manner, into the zone in which the translator (4) operates, and for positioning the lengthwise slots (2a) of the intercarriers (2) relative to the conveying elements (10) of the translator (4) with the aid of control elements (29), the belt-runs of said transport arrangement supporting the intercarriers (2) near their edges so as to permit free through-movement of the translator (4).

4. The installation as claimed in claim 3, wherein the conveying elements of the translator (4) consist of belts (10) which are arranged to be parallel and are spaced at distances matched to the intervals between the lengthwise slots (2a) of the intercarriers (2).

5. The installation as claimed in claim 3 or claim 4, wherein an upper belt system is assigned to the conveying elements (10) of the translator (4), said upper belt system consisting of lowerable, freely circulating holding-down belts (21) which come into contact with the stack row (1).

6. The installation as claimed in claim 5, wherein the holding-down belts (21) are drivable in synchronism with the transport elements (10) of the translator (4).

7. The installation as claimed in any one of claims 3 to 6, wherein an accelerating roller (28) is provided on the run-out side of the translator (4), said accelerating roller (28) being drivable at a speed higher than the speed at which the conveying elements (10) of the translator (4) are circulating, and wherein a pair of pressure rollers (27) are assigned to the accelerating roller (28) and can be brought into functionally effective association with it by being lowered.

8. The installation as claimed in claim 7, wherein the roller (28) is drivable at variable speeds.

9. The installation as claimed in any one of claims 3 to 8, wherein the transport arrangement, for transferring the intercarriers (2) into the zone in which the translator (4) operates, consists of an intermediate conveyor (6), and conveyors (5, 9) which are installed at the same level: the conveyor (5) in advance of the conveyor (6), above a pallet lifter (7), and the conveyor (9) beyond it, above an intercarrier lifter (8), these conveyors (5, 6, 9) being drivable by a common motor in a manner such that they execute stepwise movements.

10. The installation as claimed in any one of claims 3 to 9, wherein the belt-runs of the conveyors (5, 9) above the pallet lifter (7) and intercarrier lifter (8) can be moved apart, in the sense of an opening and closing action for acquiring a slightly raised intercarrier (2) or for relinquishing an intercarrier (2).

11. The installation as claimed in claim 10, wherein the lifting and lowering movement of the pallet lifter (7) is controlled in a manner such that, whenever appropriate, the stack layers (1b) on the intercarriers (2) are lifted above the level of the belt-runs of the conveyor (5) so as to be acquired or relinquished by them.

12. The installation as claimed in any one of claims 3 to 11, wherein an upper belt system is assigned to the transport apparatus (5) above the pallet lifter (7), said upper belt system being lowerable into contact with the stacks (1a) on an intercarrier (2) and drivable in synchronism with the belt-runs of said transport apparatus (5).

13. The installation as claimed in any one of claims 3 to 12, wherein use is made of an intercarrier (2') with a supporting surface which is designed in the form of a length of corrugated sheet material, or is configured in a like manner, the stacks (1a) being deposited thereon in rows by means of a transport rake (10') associated with a translator, or being lifted therefrom by said rake, which functions by virtue of the fact that its prongs can be lowered into the corrugations in the length of sheet material.

## Revendications

1. Procédé pour le chargement et le déchargement en continu, par couches, de palettes portant des piles de produits plats tels que des feuilles pliées, des revues, des livres, des brochures ou analogues, dans lequel la pile (1a) d'une couche (1b) d'un empilement est déposée sur un support intermédiaire (2) pour le chargement d'une palette (3) et est prélevée sur un support intermédiaire (2) pour le déchargement d'une palette (3), dans lequel des éléments de transport (10) d'un poste de chargement et de déchargement venant se placer sous la pile (1a) et traversent ou pénètrent dans le support intermédiaire (2) pour déposer ou prélever une pile, et dans lequel la couche (1b) de l'empilement et le support intermédiaire (2) sont empilés et dépilés simultanément en tant qu'ensemble sur ou de la palette (3).

2. Procédé selon la revendication 1, caractérisé par le fait que la pile (1a) est déposée par rangées sur le support intermédiaire (2) pour le chargement d'une palette (3) et est prélevée par rangées sur le support intermédiaire (2) pour le déchargement d'une palette (3) et que les supports intermédiaires (2) sont transportés pas à pas à travers le poste de chargement et de déchargement.

3. Dispositif pour la mise en oeuvre du procédé selon la revendication 1 ou 2 avec des supports intermédiaires (2) qui reçoivent les piles (1a) disposés en couches et dépassent latéralement pour permettre leur saisie par le dessous, caractérisé par des ouvertures longitudinales (2a) dans les supports intermédiaires (2) qui sont disposées à intervalles réguliers et à travers lesquelles, pour déposer la rangée (1) de piles sur le support intermédiaire ou pour prélever la rangée (1) de piles sur le support intermédiaire (2), des éléments de transport (10, 10') entraînés en continu en forme de rateau appartenant à un transporteur transversal (4) peuvent être déplacés dans le plan vertical au moyen d'un dispositif d'entraînement (11, 12) et par un dispositif de transport (5, 6, 9) qui amène pas à pas les différents supports intermédiaires (2) dans la zone d'action du transporteur transversal (4) et, au moyen d'éléments de commande (29), positionne les ouvertures longitudinales (2a) des supports intermédiaires (2) par rapport aux éléments de transport (10) du transporteur transversal (4), dispositif de transport dont les brins supportent les supports intermédiaires (2) dans des zones proches du bord afin de permettre le libre passage du transporteur transversal (4).

4. Dispositif selon la revendication 3, caractérisé par le fait que les éléments de transport du transporteur transversal (4) sont constitués par des courroies (10) disposées parallèlement dont la distance réciproque est adaptée aux distances entre les ouvertures longitudinales (2a) des supports intermédiaires (2).

5. Dispositif selon la revendication 3 ou 4, caractérisé par un système de bandes supérieur associé aux éléments de transport (10) du transporteur transversal (4) qui est composé de bandes presseuses (21) circulant librement qui peuvent être abaissées et appuient sur la rangée de piles.

6. Dispositif selon la revendication 5, caractérisé par le fait que les bandes presseuses (21) sont entraînées de manière synchrone avec les éléments de transports (10) du transporteur transversal (4).

7. Dispositif selon les revendications 3 à 6, caractérisé par un rouleau accélérateur (28) qui est disposé côté sortie du transporteur transversal (4) et est entraîné à une vitesse supérieure à la vitesse de déplacement des éléments de transport (10) du transporteur transversal (4) et par une paire de rouleaux presseurs (27) qui sont associés au rouleau accélérateur (28) et peuvent être amenés en liaison active avec celui-ci par abaissement.

8. Dispositif selon la revendication 7, caractérisé par le fait que le rouleau accélérateur (28) peut être entraîné à vitesse variable.

9. Dispositif selon les revendications 3 à 8, caractérisé par le fait que le dispositif de transport pour transférer le support intermédiaire (2) dans la zone d'action du transporteur transversal (4) se compose d'un transporteur intermédiaire (6), d'un dispositif transporteur (5, 9) disposé devant celui-ci au-dessus d'un dispositif de levage (7) des palettes et d'un dispositif transporteur (5, 9) disposé derrière celui-ci, au même niveau, au-dessus d'un dispositif de levage (8) des supports intermédiaires, les dispositifs de transport (5, 6, 9) étant entraînés pas à pas par un moteur commun.

10. Dispositif selon les revendications 3 à 9, caractérisé par le fait que les brins des dispositifs de transport (5, 9) au-dessus du dispositif de levage des palettes (7) et du dispositif de levage des supports intermédiaires (8) peuvent être écartés les uns des autres dans le sens d'une ouverture et d'une fermeture à des fins de prise en charge d'un support intermédiaire (2) ou de délivrance d'un support intermédiaire (2).

11. Dispositif selon la revendication 10, caractérisé par le fait que le mouvement de levée et d'abaissement du dispositif de levage des palettes (7) est commandé de manière telle que les couches (1b) des empilements sur les supports intermédiaires (2) soient amenées chaque fois au-dessus du niveau des brins en vue de leur prise en charge et de leur délivrance par les brins du dispositif de transport (5).

12. Dispositif selon les revendications 3 à 11, caractérisé par le fait qu'un système de bandes supérieur disposé au-dessus du dispositif de levage des palettes (7) est associé au dispositif de transport (5), lequel système peut être abaissé sur la pile (1a) d'un support intermédiaire (2) et est entraîné de manière synchrone avec les brins du dispositif de transport (5).

13. Dispositif selon les revendications 3 à 12, caractérisé par le fait que l'on utilise un support intermédiaire (2') dont la surface de pose se présente sous la forme d'une surface ondulée ou a une configuration analogue et par le fait que les piles (1a) sont déposées ou prélevés en rangées sur le support intermédiaire par un rateau de transport (10') d'un transporteur transversal, les dents du rateau de transport pouvant être abaissées jusque dans la surface ondulée.
